# EUROPEAN PATENT APPLICATION

(11) **EP 4 746 375 A1**
(43) Date of publication of application: **20.05.2026**
(21) Application number: 24838756.5
(22) Date of filing: 08.07.2024
(51) Int. Cl.: H04L 65/1069

(54) **CALL ESTABLISHMENT METHOD, APPARATUS AND NETWORK SIDE DEVICE**

(30) Priority: 13.07.2023 CN 202310865155
(71) Applicant: Vivo Mobile Communication Co., Ltd., Dongguan, Guangdong 523863 (CN)
(72) Inventor: JIN, Hui, Dongguan, Guangdong 523863 (CN); SUN, Xiaodong, Dongguan, Guangdong 523863 (CN)
(74) Representative: Lavoix
(86) International application number: PCT/CN2024/104115
(87) International publication number: WO 2025/011503

(57) **Abstract**

The present application discloses a call setup method and apparatus, and a network-side device, belonging to the field of communication technologies. The call setup method of the embodiments of the present application includes: receiving, by a first core network element, a first call setup request message sent by a first terminal; sending, by the first core network element, a second call setup request message to a second terminal; where at least one of the following is satisfied between the second call setup request message and the first call setup request message: a voice coding scheme carried in the second call setup request message is different from a voice coding scheme carried in the first call setup request message; the number of parameters included in a first message header carried in the second call setup request message is different from the number of parameters included in a first message header carried in the first call setup request message; and in a case that the first call setup request message carries a second message header, the second call setup request message does not carry the second message header.

## Description

### CROSS-REFERENCE TO RELATED APPLICATIONS

The present application claims priority to Chinese Patent Application No. 202310865155.0, filed with the China National Intellectual Property Administration on July 13, 2023, which is incorporated herein by reference in its entirety.

### TECHNICAL FIELD

The present application pertains to the field of communication technologies, and in particular, relates to a call setup method and apparatus, and a network-side device.

### BACKGROUND

Currently, mobile communication systems (for example, fourth-generation (4th generation, 4G) or fifth-generation (5th generation, 5G) communication systems) generally use internet protocol (Internet Protocol, IP) multimedia subsystem (IP Multimedia Subsystem, IMS)-based voice for voice communication, for example, voice over LTE (Voice over LTE, VoLTE) and voice over new radio (Voice over NR, VoNR).

With the increasingly widespread application of satellite communication systems, some user equipment (User Equipment, UE) can conduct voice communication via satellite communication systems. A satellite communication system typically consists of three components: a satellite segment, a ground segment, and a user segment. The satellite segment functions as a relay station in the air, that is, amplifying electromagnetic waves transmitted from a ground station and then transmitting them back to the ground station. Since the satellite segment is often far from the ground, interaction between ground equipment (UE or ground segment) and the satellite segment often requires a larger link budget. Therefore, in order to meet the link budget, some specific processing needs to be performed on voice communication of a UE based on satellite communication, for example, adopting a low-rate voice coding scheme (for example, a voice coding scheme with a bit rate of 1.2 kbps or 0.6 kbps), optimizing voice data packets. However, if the peer UE does not support voice communication after the above specific processing, voice call setup will fail, resulting in low reliability of voice communication. Thus, in the prior art, the reliability of voice communication is low when a UE performs satellite-based voice communication.

### SUMMARY

Embodiments of the present application provide a call setup method and apparatus, and a network-side device, which can improve the reliability of voice communication when a UE performs satellite-based voice communication.

According to a first aspect, a call setup method is provided, where the method includes:
receiving, by a first core network element, a first call setup request message sent by a first terminal; where the first call setup request message is used to request establishment of a voice call between the first terminal and a second terminal; and
sending, by the first core network element, a second call setup request message to the second terminal; where the second call setup request message is determined based on the first call setup request message, and at least one of the following is satisfied between the second call setup request message and the first call setup request message:
   a voice coding scheme carried in the second call setup request message is different from a voice coding scheme carried in the first call setup request message;
   the number of parameters included in a first message header carried in the second call setup request message is different from the number of parameters included in a first message header carried in the first call setup request message;
   in a case that the first call setup request message carries a second message header, the second call setup request message does not carry the second message header, and in a case that the first call setup request message does not carry a second message header, the second call setup request message carries the second message header.

According to a second aspect, a call setup apparatus is provided, where the apparatus includes:
a first receiving module, configured to receive a first call setup request message sent by a first terminal; where the first call setup request message is used to request establishment of a voice call between the first terminal and a second terminal; and
a first sending module, configured to send a second call setup request message to the second terminal; where the second call setup request message is determined based on the first call setup request message, and at least one of the following is satisfied between the second call setup request message and the first call setup request message:
   a voice coding scheme carried in the second call setup request message is different from a voice coding scheme carried in the first call setup request message;
   the number of parameters included in a first message header carried in the second call setup request message is different from the number of parameters included in a first message header carried in the first call setup request message; and
   in a case that the first call setup request message carries a second message header, the second call setup request message does not carry the second message header, and in a case that the first call setup request message does not carry a second message header, the second call setup request message carries the second message header.

According to a third aspect, a network-side device is provided, where the network-side device includes a processor and a memory, the memory stores a program or instructions executable on the processor, and the program or instructions, when executed by the processor, cause the steps of the method according to the first aspect to be implemented.

According to a fourth aspect, a network-side device is provided and includes a processor and a communication interface, where the communication interface is configured to: receive a first call setup request message sent by a first terminal; where the first call setup request message is used to request establishment of a voice call between the first terminal and a second terminal; and send a second call setup request message to the second terminal; where the second call setup request message is determined based on the first call setup request message, and at least one of the following is satisfied between the second call setup request message and the first call setup request message: a voice coding scheme carried in the second call setup request message is different from a voice coding scheme carried in the first call setup request message; the number of parameters included in a first message header carried in the second call setup request message is different from the number of parameters included in a first message header carried in the first call setup request message; and in a case that the first call setup request message carries a second message header, the second call setup request message does not carry the second message header, and in a case that the first call setup request message does not carry a second message header, the second call setup request message carries the second message header.

According to a fifth aspect, a readable storage medium is provided, where a program or instructions are stored on the readable storage medium, and the program or instructions, when executed by a processor, cause the steps of the method according to the first aspect to be implemented.

According to a sixth aspect, a chip is provided, where the chip includes a processor and a communication interface, the communication interface is coupled to the processor, and the processor is configured to run a program or instructions to implement the steps of the method according to the first aspect.

According to a seventh aspect, a computer program/program product is provided, where the computer program/program product is stored in a storage medium, and the computer program/program product is executed by at least one processor to implement the steps of the method according to the first aspect.

In the embodiments of the present application, a first core network element receives a first call setup request message sent by a first terminal, and sends a second call setup request message to a second terminal, where the second call setup request message is determined based on the first call setup request message, and at least one of the following is satisfied between the second call setup request message and the first call setup request message: a voice coding scheme carried in the second call setup request message is different from a voice coding scheme carried in the first call setup request message; the number of parameters included in a first message header carried in the second call setup request message is different from the number of parameters included in a first message header carried in the first call setup request message; and in a case that the first call setup request message carries a second message header, the second call setup request message does not carry the second message header, and in a case that the first call setup request message does not carry a second message header, the second call setup request message carries the second message header. To be specific, in the embodiments of the present application, when the first terminal or the second terminal conducts voice communication via a communication satellite, the first core network element may modify the content of the first call setup request message (that is, at least one of the voice coding scheme, the first message header, and the second message header) to generate a second call setup request message adapted to the second terminal, and send it to the second terminal. In this way, when voice communication modes supported by terminals on both sides of voice communication are different, it is helpful to ensure successful establishment of a voice call between the two terminals, thereby improving the reliability of voice communication and expanding the scope of application of voice communication.

### BRIEF DESCRIPTION OF DRAWINGS

FIG. 1 is a block diagram of a wireless communication system to which embodiments of the present application are applicable;
FIG. 2 is a first flowchart of a call setup method according to an embodiment of the present application;
FIG. 3 is a second flowchart of a call setup method according to an embodiment of the present application;
FIG. 4 is a third flowchart of a call setup method according to an embodiment of the present application;
FIG. 5 is a fourth flowchart of a call setup method according to an embodiment of the present application;
FIG. 6 is a structural diagram of a call setup apparatus according to an embodiment of the present application;
FIG. 7 is a structural diagram of a communication device according to an embodiment of the present application; and
FIG. 8 is a structural diagram of a network-side device according to an embodiment of the present application.

### DETAILED DESCRIPTION OF EMBODIMENTS

The technical solutions in the embodiments of the present application will be clearly described below in conjunction with the accompanying drawings in the embodiments of the present application. Obviously, the described embodiments are some of the embodiments of the present application, but not all of the embodiments. Based on the embodiments in the present application, all other embodiments obtained by those of ordinary skill in the art fall within the protection scope of the present application.

The terms "first", "second", and the like in the present application are used to distinguish similar objects and are not used to describe a specific order or sequence. It should be understood that the terms so used are interchangeable under appropriate circumstances so that the embodiments of the present application can be implemented in an order other than those illustrated or described herein, and the objects distinguished by "first" and "second" are generally of one type and the number of objects is not limited. For example, there may be one or more first objects. In addition, "or" in the present application indicates at least one of the connected objects. For example, "A or B" covers three cases: only A, only B, and both A and B. The character "/" generally indicates an "or" relationship between the associated objects.

The term "indication" in the present application may be a direct indication (or explicit indication) or an indirect indication (or implicit indication). A direct indication can be understood as the sender explicitly informing the receiver of specific information, operations to be performed, request results, or the like in the sent indication; and an indirect indication can be understood as the receiver determining corresponding information according to the indication sent by the sender, or making a judgment and determining the operation to be performed or the request result according to the judgment result.

It is worth noting that the techniques described in the embodiments of the present application are not limited to long term evolution (Long Term Evolution, LTE)/LTE-advanced (LTE-Advanced, LTE-A) systems, but can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of the present application are often used interchangeably, and the described techniques can be used for the above-mentioned systems and radio technologies as well as other systems and radio technologies. The following description describes a new radio (New Radio, NR) system for example purposes, and NR terminology is used in most of the following description, but these techniques can also be applied to systems other than NR system applications, such as the 6^{th} Generation (6^{th} Generation, 6G) communication system.

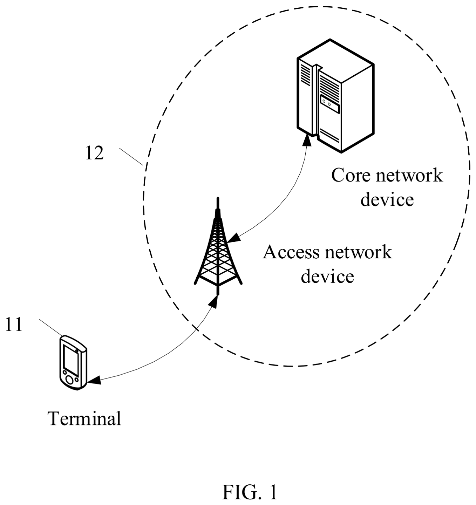

FIG. 1 is a block diagram of a wireless communication system to which the embodiments of the present application are applicable. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) device, virtual reality (Virtual Reality, VR) device, a robot, a wearable device (Wearable Device), a flight vehicle (flight vehicle), a vehicle user equipment (Vehicle User Equipment, VUE), a ship-borne device, a pedestrian user equipment (Pedestrian User Equipment, PUE), a smart home (home device with wireless communication function, such as a refrigerator, a television, a washing machine, or furniture), a game console, a personal computer (Personal Computer, PC), a teller machine or a self-service machine, and other terminal-side devices. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment can also be called vehicle terminal, vehicle controller, vehicle module, vehicle component, vehicle chip, or vehicle unit. In addition to the above terminal equipment, it can also be a chip in the terminal, such as a modem (Modem) chip, a system on chip (System on Chip, SoC). It should be noted that the specific type of the terminal 11 is not limited in the embodiments of the present application. The network-side device 12 may include an access network device or a core network device, where the access network device may also be called a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be called Node B (Node B, NB), evolved Node B (Evolved Node B, eNB), next generation Node B (the next generation Node B, gNB), new radio Node B (New Radio Node B, NR Node B), access point, relay station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmission reception point (Transmission Reception Point, TRP), or some other suitable term in the field. As long as the same technical effect is achieved, the base station is not limited to specific technical vocabulary. It should be noted that in the embodiments of the present application, only the base station in the NR system is taken as an example for introduction, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that in the embodiments of the present application, only the core network device in the NR system is taken as an example for introduction, and the specific type of the core network device is not limited.

To facilitate understanding, some contents involved in the embodiments of the present application are described below.

### I. Satellite communication system.

A satellite communication system consists of three components: a satellite segment, a ground segment, and a user segment. The satellite segment functions as a relay station in the air, that is, amplifying electromagnetic waves transmitted from a ground station and then transmitting them back to the ground station. According to the working orbit, satellite communication systems are generally classified into the following three categories.

Low earth orbit (Low Earth Orbit, LEO) satellite communication system: operating at an altitude of 500-2000 km from the Earth's surface, with a relatively low transmission delay and power consumption, but each satellite also has a relatively small coverage area.

Middle earth orbit (Middle Earth Orbit, MEO) satellite communication system: operating at an altitude of 2000-20000 km from the Earth's surface, with a transmission delay higher than that of low-earth-orbit satellites, but a larger coverage area.

Geostationary earth orbit (Geostationary Earth Orbit, GEO) satellite communication system: operating at an altitude of 35800 km from the Earth's surface, that is, geosynchronous stationary orbit. Theoretically, global coverage can be achieved with three high-orbit satellites.

Currently, the minimum communication rate required for IMS voice is 4.75 kbps. When a UE conducts voice communication via a satellite communication system (for example, GEO), in order to meet the link budget, the voice communication rate of the UE conducting the voice communication via the satellite communication system is reduced to 1.2 kbps or 0.6 kbps.

### II. Voice call procedure

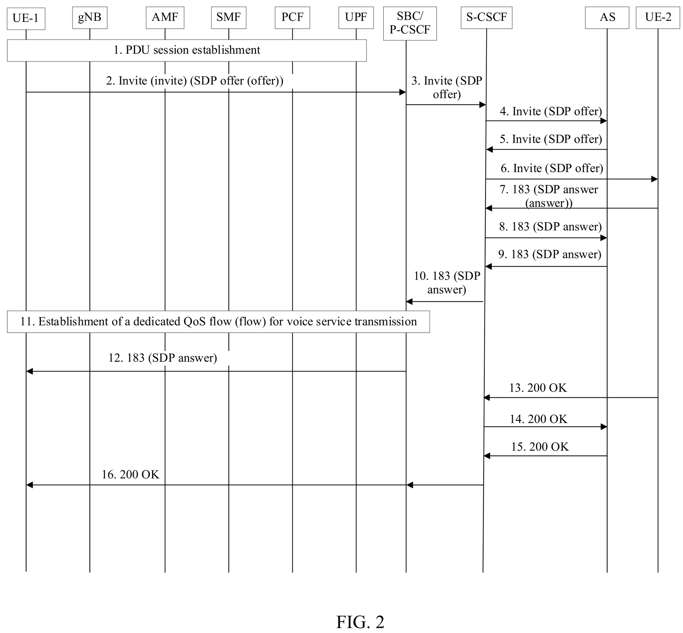

For example, the procedure for UE-1 to initiate the establishment of an IMS voice call with UE-2 may be as illustrated in FIG. 2, where UE-1 accesses a gNB via a communication satellite and further accesses IMS network elements. As shown in FIG. 2, the above voice call setup procedure includes the following steps.

Step 1. UE-1 establishes a protocol data unit (Protocol Data Unit, PDU) session for transmitting IMS services.

Step 2. UE-1 initiates an IMS call setup request using a session initiation protocol (Session Initiation Protocol, SIP) invite (Invite) message, where the call setup request carries information of the voice media to be established in a session description protocol (Session Description Protocol, SDP) offer (offer).

For example, the SDP may include the following content:
m=audio 0 RTP/AVP 97;
a=rtpmap:97 AMR/8000/1;
a=fmtp:97 mode-set=0,1,2,3,4,5,6,7; mean-awb-bitrate=4750;
b=AS:22; where
the m-line indicates that the media type is voice service;
the a-line indicates attribute information of the voice service:
   "97" denotes the real-time transport protocol (Real-time Transport Protocol, RTP) payload type (payloadtype), "AMR" indicates that the coding format is AMR-NB, "8000" represents the sampling rate, and "1" indicates mono channel. In the subsequent a=fmtp line, two parameters are used to specify the coding mode and bit rate; the "mode-set" parameter with values "0,1,2,3,4,5,6,7" indicates the coding modes supported by AMR-NB, where the selected mode will affect coding efficiency and quality; and mean-awb-bitrate=4750 represents an average bit rate of 4.75 kbps; and
   "b=AS:22" indicates that the bandwidth of the core network required for transmitting the voice service is 22 kbps, where 22 kbps is a value calculated based on 4.75 kbps, and AS stands for adaptive sizing (Adaptive Sizing).

It should be noted that in a satellite scenario, UE-1 and the gNB are connected via satellite and ground segment.

Step 3. A session border controller (Session Border Controller, SBC)/proxy call session control function (Proxy Call Session Control Function, P-CSCF) sends an invite message to a serving call session control function (Serving Call Session Control Function, S-CSCF).

It should be noted that the P-CSCF and S-CSCF in FIG. 2 are IMS network elements serving UE-1, and the IMS network elements serving UE-2 are not depicted.

It should also be noted that SBC is a critical network node in the IMS network, which is located at the edge of the IMS network and plays an important role in accessing end users to the IMS core network. The key functions of the SBC include access permission control, network topology hiding, network address translation (Network Address Translation, NAT) and NAT traversal, quality of service (Quality of Service, QoS), and bandwidth policy adjustment. The SBC can integrate both control plane and user plane, or the control plane and user plane can be separated, for example, SBC-C is used for control, and SBC-U is used for media data transmission.

SBC/P-CSCF refers to a network element that integrates both SBC function and P-CSCF function, for example, an SBC with embedded P-CSCF functionality, or a P-CSCF with embedded SBC functionality, or a co-located deployment of SBC and P-CSCF, that is, a network element incorporating all functions of both SBC and P-CSCF.

Step 4. The S-CSCF sends the invite message to an application server (Application Server, AS) serving UE-1.

Step 5. The AS processes the invite message and sends it back to the S-CSCF.

Step 6. The S-CSCF sends the invite message to UE-2.

Step 7. UE-2 responds with a 183 response message, where the 183 message contains SDP-supported voice service information provided by UE-2.

If UE-1 offers multiple voice coding schemes in step 2, for example, supporting 4.75 kbps and 12.2 kbps, UE-2 will select one supported voice coding scheme and carry it in the SDP answer (answer) of the 183 message.

It should be noted that upon receiving the 183 message, the P-CSCF serving UE-2 triggers the establishment of a dedicated QoS flow for voice service transmission to UE-2, consistent with step 11.

It should also be noted that although the QoS flow of the 5G communication system is used as an example for description above, it may be replaced with an evolved packet system (Evolved Packet System, EPS) bearer (bearer) of the 4G communication system, or any equivalent concept/term in other communication systems that serves the same purpose as the aforementioned QoS flow or EPS bearer, which is not limited in this embodiment.

Step 8. The 183 message is sent to the AS via the S-CSCF.

Step 9. The AS processes the 183 message and sends it back to the S-CSCF.

Step 10. The S-CSCF sends the 183 message to the SBC/P-CSCF.

Step 11. Based on the SDP answer, the P-CSCF sends a message to the 5G policy control function (Policy Control Function, PCF) to request the establishment of a dedicated QoS flow for voice service transmission.

Step 12. After the QoS flow is established, the P-CSCF sends the 183 message to UE-1.

Step 13. When UE-2 answers the call, it sends a 200 OK confirmation message to the S-CSCF.

Steps 14-16. The 200 OK message is sent to UE-1 via the AS, S-CSCF, and SBC/P-CSCF, at which point UE-1 and UE-2 commence the call.

The call setup method provided in the embodiments of the present application will be described in detail below through some embodiments and their application scenarios in conjunction with the accompanying drawings.

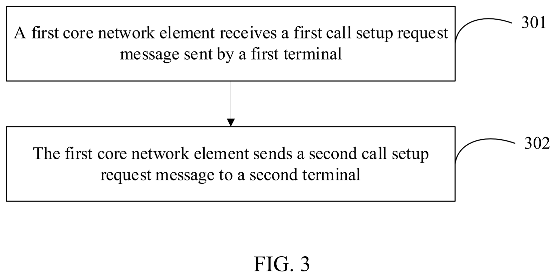

Referring to FIG. 3, FIG. 3 is a flowchart of a call setup method according to an embodiment of the present application. The method can be executed by a first core network element. As shown in FIG. 3, the method includes the following steps.

Step 301. A first core network element receives a first call setup request message sent by a first terminal; where the first call setup request message is used to request establishment of a voice call between the first terminal and a second terminal.

In this embodiment, the first core network element may include but is not limited to at least one of SBC, P-CSCF, and AS, or the above first core network element may be a new core network element, for example, a core network element integrating SBC function and P-CSCF function. The above first terminal or second terminal may conduct voice communication via satellite, that is, the above first terminal or second terminal may be a non-terrestrial network (Non-Terrestrial Network, NTN) terminal. In some optional embodiments, the above first core network element may be a core network element dedicated to voice communication for NTN terminals.

For example, the above first call setup request message may be a SIP Invite message, which carries an SDP offer, and the SDP offer may carry information of the voice media to be established, for example, the SDP offer may include some or all of the following contents:
m=audio 0 RTP/AVP 97;
a=rtpmap:97 AMR/8000/1;
a=fmtp:97 mode-set=0,1,2,3,4,5,6,7; mean-awb-bitrate=1200;
b=AS:22; where
the m-line indicates that the media type is voice service; and the a-line indicates attribute information of the voice service:
   "97" denotes the RTP payload type (payloadtype), "AMR" indicates that the coding format is AMR-NB, "8000" represents the sampling rate, and "1" indicates mono channel. In the subsequent a=fmtp line, the "mode-set" parameter with values "0,1,2,3,4,5,6,7" indicates the coding modes supported by AMR-NB; and mean-awb-bitrate=1200 represents an average bit rate of 1.2 kbps; and
   "b=AS: 18.4" indicates that the bandwidth of the core network required for transmitting the voice service is 18.4 kbps, where 18.4 kbps is a value calculated based on 1.2 kbps.

Step 302. The first core network element sends a second call setup request message to the second terminal; where the second call setup request message is determined based on the first call setup request message, and at least one of the following is satisfied between the second call setup request message and the first call setup request message:
a voice coding scheme carried in the second call setup request message is different from a voice coding scheme carried in the first call setup request message;
the number of parameters included in a first message header carried in the second call setup request message is different from the number of parameters included in a first message header carried in the first call setup request message; and
in a case that the first call setup request message carries a second message header, the second call setup request message does not carry the second message header, and in a case that the first call setup request message does not carry a second message header, the second call setup request message carries the second message header.

In this embodiment, when the first core network element has received the first call setup request message, it can modify the content of the first call setup request message to generate the second call setup request message, and send the second call setup request message to the second terminal. It can be understood that the first core network element can send the second call setup request message to the second terminal directly or indirectly, for example, if the first core network element is SBC or P-CSCF, it can send the second call setup request message to the second terminal via S-CSCF.

The following are examples of the above parameters respectively.

The voice coding scheme carried in the second call setup request message is different from the voice coding scheme carried in the first call setup request message, which may include: the average bit rate carried in the second call setup request message being different from the average bit rate carried in the first call setup request message, or the bandwidth adaptation (that is, b=AS) carried in the second call setup request message being different from the bandwidth adaptation carried in the first call setup request message.

For example, if the average bit rate carried in the first call setup request message is a value greater than or equal to 4.75 kbps, the average bit rate carried in the second call setup request message may be a value less than 4.75 kbps, for example, 0.6 kbps or 1.2 kbps; if the average bit rate carried in the first call setup request message is a value less than 4.75 kbps, the average bit rate carried in the second call setup request message may be a value greater than or equal to 4.75 kbps.

For another example, if the bandwidth adaptation carried in the first call setup request message is a value greater than or equal to 22, the bandwidth adaptation carried in the second call setup request message may be a value less than 22, for example, b=AS:18.4 or 17.6; if the bandwidth adaptation carried in the first call setup request message is a value less than 22, the bandwidth adaptation carried in the second call setup request message may be a value greater than or equal to 22.

The number of parameters included in the first message header carried in the second call setup request message is different from the number of parameters included in the first message header carried in the first call setup request message. The first message header may include but is not limited to at least one of a contact (contact) header, a call-ID (call-ID) header, an allow (allow) header, and a from (from) header. For example, if the first message header carried in the first call setup request message includes all its corresponding parameters (that is, the content of the first message header is complete), some of the parameters of the first message header carried in the first call setup request message can be deleted or streamlined to obtain the first message header carried in the second call setup request message; if the first message header carried in the first call setup request message only includes some of its corresponding parameters (that is, the content of the first message header is incomplete), the content of the first message header carried in the first call setup request message can be supplemented to be complete, to be specific, the missing or unincluded parameters of the first message header can be supplemented, to obtain the first message header carried in the second call setup request message.

In some optional embodiments, the parameters to be carried in the first message header can be agreed by protocol. If the first message header carried in a call setup request message does not carry all the protocol-agreed parameters, the content of the first message header carried in the call setup request message is deemed incomplete. If the first message header carried in a certain call setup request message carries all the protocol-agreed parameters, the content of the first message header carried in the call setup request message is deemed complete. For example, for a contact header, its complete content is: Contact:<sip+xxxxxxxxxxxx@yyy.yyy.yyy.yy:zzzz>, and its corresponding incomplete or streamlined content is: Contact:<yyy.yyyyyy.yy:zzzz>. In addition, the above parameters to be deleted or streamlined can be agreed by protocol.

For the case that the first call setup request message carries a second message header, the second call setup request message does not carry the second message header, and for the case that the first call setup request message does not carry a second message header, the second call setup request message carries the second message header. The above second message header may include but is not limited to at least one of supported (supported) header, minimum session expiration (min- Session Expiration, min-SE) header, and via (via) header. For example, in the case that the first call setup request message does not contain the second message header, the first core network element may add the second message header to the first call setup request message to generate the second call setup request message; and in the case that the first call setup request message contains the second message header, the first core network element may delete the second message header from the first call setup request message to generate the second call setup request message.

It should be noted that in this embodiment, the first terminal and the second terminal may use different voice communication modes. For example, one of the first terminal and the second terminal is an NTN terminal, and the other is a terrestrial network (Terrestrial Network, TN) terminal. In addition, the content carried in the first call setup request message (for example, voice coding scheme, first message header, second message header.) may be content adapted to the first terminal or content that can be parsed by the first terminal, and the content carried in the second call setup request message may be content adapted to the second terminal or content that can be parsed by the second terminal.

The following takes an example where the first terminal is an NTN terminal and the second terminal is a terrestrial network (Terrestrial Network, TN) terminal. The first core network device receives a first call setup request message from the first terminal, where the average bit rate carried in the first call setup request message is 1.2 kbps, and the bandwidth adaptation carried in the first call setup request message is 18.4. Then the first core network device may modify the average bit rate of the first call setup request message to 4.75 kbps, or modify the bandwidth adaptation of the first call setup request message to 22, and send the call setup request message with the modified average bit rate or bandwidth adaptation to the second terminal. Since the second terminal supports the modified average bit rate or bandwidth adaptation, the second terminal may send a response message to the first core network device to confirm its agreement to establish a voice call with the first terminal.

The call setup method provided in the embodiments of the present application may, when the first terminal or the second terminal conducts voice communication via a communication satellite, modify the content of the first call setup request message (that is, at least one of the voice coding scheme, the first message header, and the second message header) via the first core network element to generate a second call setup request message adapted to the second terminal, and send it to the second terminal. In this way, when voice communication modes supported by terminals on both sides of voice communication are different, it is helpful to ensure successful establishment of a voice call between the two terminals, thereby improving the reliability of voice communication and expanding the scope of application of voice communication.

Optionally, the first message header includes at least one of the following:
contact header, call-ID header, allow header, and from header.

Optionally, the second message header includes at least one of the following: supported header, minimum session expiration header, and via header.

Optionally, the voice coding scheme carried in the second call setup request message is a voice coding scheme supported by the second terminal.

For example, if the second terminal is an NTN terminal, the average bit rate carried in the second call setup request message may be a value less than 4.75 kbps, for example, 0.6 kbps or 1.2 kbps, or the bandwidth adaptation carried in the second call setup request message may be a value less than 22, for example, b=AS:18.4 or 17.6; if the second terminal is a TN terminal, the average bit rate carried in the second call setup request message may be a value greater than or equal to 4.75 kbps, or the bandwidth adaptation carried in the second call setup request message may be a value greater than or equal to 22, for example, b=AS:22.

Optionally, the method further includes:
sending, by the first core network element, a second response message to the first terminal, in response to receiving a first response message sent by the second terminal; where the first response message is used to respond to the second call setup request message, and the second response message is used to respond to the first call setup request message.

In this embodiment, when the first core network element has received the first response message sent by the second terminal, it can immediately send the second response message to the first terminal. Compared with the prior art in which the first core network element sends the second response message to the first terminal after establishing a bearer for voice service transmission for the first terminal, the delay of call setup can be shortened.

Optionally, in response to receiving the first response message sent by the second terminal, the first core network element does not establish a bearer for voice service transmission for the first terminal.

In this embodiment, the first core network element may not establish a bearer for voice service transmission for the first terminal, for example, voice service may be transmitted over the IMS signaling bearer, which can not only reduce resource overhead, but also shorten the call setup delay.

Optionally, the method further includes:
performing, by the first core network element in response to receiving the first call setup request message sent by the first terminal, at least one of the following:
establishing a bearer for voice service transmission for the first terminal; and
sending a third response message to the first terminal, where the third response message is used to respond to the first call setup request message.

In this embodiment, when the first core network element has received the first call setup request message sent by the first terminal, it establishes a bearer for voice service transmission for the first terminal, for example, establishing a QoS flow for voice service transmission for the first terminal, an evolved packet system (Evolved Packet System, EPS) bearer, and the like; or sends a third response message to the first terminal, where the third response message is used to respond to the first call setup request message, for example, sending a 183 message, a 180 message, or a 200 OK message carrying an SDP answer to the first terminal. The following takes the third response message as a 183 message as an example for introduction.

It can be understood that in the prior art, it is necessary to establish a bearer for voice service transmission for the first terminal and feed back a 183 message to the first terminal only after receiving the 183 message returned by the second terminal, as shown in FIG. 2, which leads to a long call delay. However, in this embodiment, when the first core network element has received the first call setup request message sent by the first terminal, it can directly establish a bearer for voice service transmission for the first terminal or send a first response message to the first terminal, which is conducive to shortening the call setup delay.

Optionally, the bearer for voice service transmission includes at least one of the following: quality of service QoS flow and evolved packet system EPS bearer.

Optionally, the sending, by the first core network element, a second call setup request message to the second terminal includes:
sending, by the first core network element in response to determining that a target terminal accesses a network via a communication satellite, the second call setup request message to the second terminal; where the target terminal includes the first terminal or the second terminal.

In this embodiment, the target terminal accesses the network via the communication satellite, to be specific, the target terminal performs voice communication via a communication satellite. The target terminal may also be referred to as an NTN terminal. It can be understood that this embodiment is applicable to a scenario where a calling terminal (that is, the first terminal) communicates via a communication satellite, and is also applicable to a scenario where a called terminal (that is, the second terminal) communicates via a communication satellite.

For example, in a scenario where the first core network element is used for both voice communication of NTN terminals and voice communication of TN terminals, when the first core network element has received the first call setup request message, it can determine whether the first terminal or the second terminal accesses the network via a communication satellite, and in response to determining that the first terminal or the second terminal accesses the network via a communication satellite, send the second call setup request message to the second terminal to ensure voice communication between the first terminal and the second terminal.

Optionally, the target terminal includes the first terminal;
the method further includes:
determining, by the first core network element based on first information, that the first terminal accesses the network via a communication satellite; where
the first information includes at least one of the following:
   an access type (access type) carried in the first call setup request message;
   a voice coding scheme carried in the first call setup request message;
   message content carried in the first call setup request message;
   access information of the first terminal pre-stored by the first core network element; and
   an access type of the first terminal received by the first core network element from a second core network element.

The following are examples of the above parameter items respectively.

Regarding the access type carried in the first call setup request message, for example, in a case that the access type carried in the first call setup request message is satellite access (for example, access-type=3GPP-NR-SAT), it can be determined that the first terminal accesses the network via a communication satellite. It should be noted that the access type can be included in P-Access-Network-Info (P-Access-Network-Info) header of the IMS message.

Regarding the voice coding scheme carried in the first call setup request message, for example, in a case that the voice coding scheme carried in the first call setup request message is a specific voice coding scheme (for example, mean-awb-bitrate=1200 or 600; or b=AS: 18.4 or 17.6), it can be determined that the first terminal accesses the network via a communication satellite.

Regarding the message content carried in the first call setup request message, for example, in a case that the message content carried in the first call setup request message is specific message content, it is determined that the first terminal accesses the network via a communication satellite. For example, the message content carried in the first call setup request message is streamlined message content, and the streamlined message content may include but is not limited to message content without a voice coding scheme, and message content without an access type. It should be noted that since some NTN UEs only support one voice coding transmission mode, the voice coding scheme may be omitted from the SDP to reduce the transmission volume of IMS signaling. For another example, the message content carried in the first call setup request message contains special indication information, and the special indication information is used to indicate that the first terminal accesses the network via a communication satellite.

Regarding the access information of the first terminal pre-stored by the first core network element, for example, when the first terminal performs IMS registration, it carries information indicating that it accesses the network via a satellite, for example, access-type=3GPP-NR-SAT. The first core network element then records the access information of the first terminal, for example, it records the access mode corresponding to the public identity identifier of the first terminal. When receiving a call initiated by the terminal identified by the public identity identifier or a call destined for the terminal identified by the public identity identifier, the first core network element can determine, based on the locally stored access information of the first terminal, that the first terminal accesses the network via a satellite.

Regarding the access type of the first terminal received by the first core network element from the second core network element, for example, P-CSCF requests the access type of the first terminal from PCF or PCRF, for example, NR_GEO or NR_MEO; or the AS instructs the P-CSCF to request the access type of the first terminal from the PCF or PCRF, for example, NR_GEO, NR_MEO; or the AS obtains the access type of the first terminal from the HSS/UDM, or the AS instructs the S-CSCF to obtain the access type of the first terminal from the HSS/UDM, for example, access-type=3GPP-NR-SAT; or when the SBC/P-CSCF determines, based on locally stored access information, that the first terminal uses satellite access, it requests the access type of the first terminal from the PCF/PCRF.

It can be understood that the above parameter items can be reasonably combined according to actual needs, for example, in a case that the first information includes the access type carried in the first call setup request message and the voice coding scheme carried in the first call setup request message, the access type carried in the first call setup request message can be preferentially used to determine whether the first terminal accesses the network via a communication satellite; in the case that the first information includes the voice coding scheme carried in the first call setup request message and the pre-stored access information of the first terminal, the voice coding scheme carried in the first call setup request message can be preferentially used to determine whether the first terminal accesses the network via a communication satellite.

Optionally, the target terminal includes the second terminal;
the method further includes:
determining, by the first core network element based on second information, that the second terminal accesses the network via a communication satellite; where
the second information includes at least one of the following:
   access information of the second terminal pre-stored by the first core network element; and
   an access type of the second terminal received by the first core network element from a second core network element.

In this embodiment, regarding the access information of the second terminal pre-stored by the first core network element, for example, when the second terminal performs IMS registration, it carries information indicating that it accesses the network via a satellite, for example, access-type=3GPP-NR-SAT. The first core network element then records the access information of the second terminal, for example, it records the access mode corresponding to the public identity identifier of the second terminal. When receiving a call initiated by the terminal identified by the public identity identifier or a call destined for the terminal identified by the public identity identifier, the first core network element can determine, based on the locally stored access information of the second terminal, that the second terminal accesses the network via a satellite.

Regarding the access type of the second terminal received by the first core network element from the second core network element, for example, P-CSCF requests the access type of the second terminal from PCF or PCRF, for example, NR_GEO or NR_MEO; or the AS instructs the P-CSCF to request the access type of the second terminal from the PCF or PCRF, for example, NR_GEO or NR_MEO; or the AS obtains the access type of the second terminal from the HSS/UDM, or the AS instructs the S-CSCF to obtain the access type of the second terminal from the HSS/UDM, for example, access-type=3GPP-NR-SAT; or when the SBC/P-CSCF determines, based on locally stored access information, that the second terminal uses satellite access, it requests the access type of the second terminal from the PCF/PCRF.

Optionally, the first core network element is a session border controller SBC or a proxy call session control function P-CSCF.

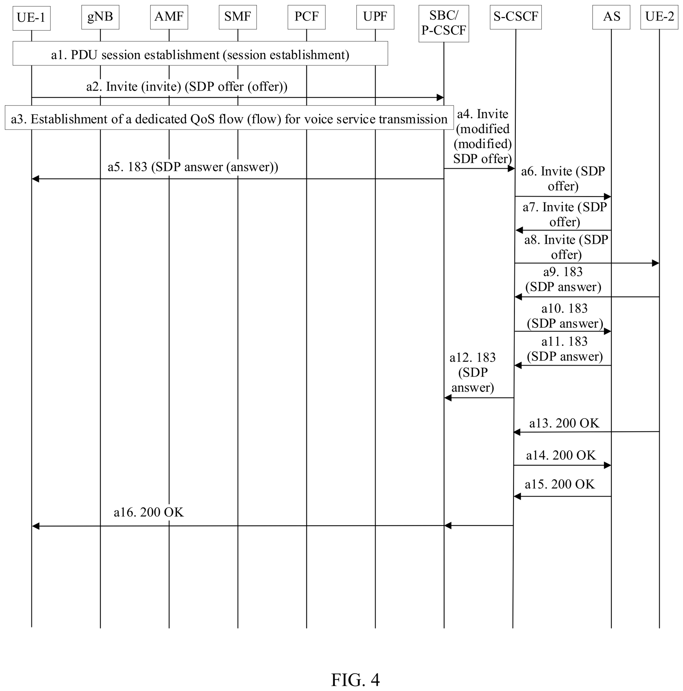

The following provides an illustrative description with reference to FIG. 4, where the first core-network network element is an SBC or a P-CSCF.

As shown in FIG. 4, the call setup method according to this embodiment includes the following steps.

Step a1. UE-1 establishes a PDU session for transmitting IMS services.

Step a2. UE-1 sends an invite message carrying an SDP offer to an SBC/P-CSCF.

Step a3. When the SBC/P-CSCF determines that UE-1 or UE-2 accesses a network via a satellite, it directly initiates a procedure for establishing a dedicated QoS flow for voice service transmission without waiting for the 183 message returned by UE-2.

Step a4. When the SBC/P-CSCF determines that UE-1 or UE-2 accesses a network via a satellite, the SBC/P-CSCF modifies the voice coding scheme in the SDP offer, and sends an invite message carrying the modified SDP offer (that is, Modified SDP offer) to an S-CSCF so as to send it to UE-2 via the S-CSCF.

For example, the SBC/P-CSCF modifies the mean-awb-bitrate of SDP offer from 1200 to 4750, or modifies b=AS from 18.4 to 22.

Step a5. After the dedicated QoS flow is established, the SBC/P-CSCF sends the 183 message to UE-1, carrying an SDP answer.

Step a6. The S-CSCF sends the invite message to an AS serving UE-1.

Step a7. The AS processes the invite message and sends it back to the S-CSCF.

Step a8. The S-CSCF sends the invite message to UE-2.

Step a9. UE-2 responds with a 183 response message, where the 183 message contains SDP-supported voice service information provided by UE-2.

Step a10. The 183 message is sent to the AS via the S-CSCF.

Step a11. The AS processes the 183 message and sends it back to the S-CSCF.

Step a12. The S-CSCF sends the 183 message to the SBC/P-CSCF.

Step a13. When UE-2 answers the call, it sends a 200 OK confirmation message to the S-CSCF.

Steps a14-16. The 200 OK message is sent to UE-1 via the AS, S-CSCF, and SBC/P-CSCF, at which point UE-1 and UE-2 commence the call.

It should be noted that the execution order of the above step a3 and step a4 is not fixed, and they can be executed simultaneously. In addition, the execution order of the above step a5 and step a6 is not fixed, and they can also be executed simultaneously.

It should also be noted that FIG. 4 is illustrated by taking UE-1 as the calling party as an example. In the scenario where UE-1 acts as the called party, when the SBC/P-CSCF receives the call setup request message destined for UE-1, and determines that UE-1 accesses the network via a satellite, it can directly send a 183 message to the initiator, carrying an SDP answer.

It can be seen that in this embodiment, when determining that either UE-1 or UE-2 accesses the network via a satellite, the SBC/P-CSCF performs voice coding scheme conversion and directly initiates the procedure for establishing a dedicated QoS flow for voice service transmission. This not only ensures voice communication between the two terminals when the voice coding schemes supported by the terminals on both sides of voice communication are different, improving the reliability of voice communication and expanding the scope of application of voice communication, but also shortens the voice call setup delay.

Optionally, the method further includes:
sending, by the first core network element, a third call setup request message to a media resource function (Media Resource Function, MRF); where the third call setup request message is determined based on the first call setup request message; and
receiving, by the first core network element, a fourth response message from the MRF, where the fourth response message is used to respond to the third call setup request message.

For example, before performing a first operation, the first core network element may send a third call setup request message to the MRF, for example, an invite message carrying an SDP offer, where the message content carried in the third call setup request message may be the same as the message content carried in the first call setup request message (for example, SDP offer). When the MRF has received the third call setup request message, it may send a response message in reply to the third call setup request message to the first core network device, for example, a 200 OK message carrying an SDP answer.

It should be noted that in this embodiment, after sending the third call setup request message to the MRF and receiving the response message of the third call setup request message from the MRF, the first core network element may further send a response message in reply to the third call setup request message to the first terminal to establish an RTP connection for voice transmission between the first terminal and the MRF, and the RTP connection supports transmission of a voice code stream encoded using the voice coding scheme supported by the first terminal. In this way, the voice code stream from the first terminal can be first transmitted to the MRF via the above RTP connection and then transmitted to the second terminal after being processed by the MRF.

Optionally, the first operation includes sending a second call setup request message to the second terminal;
the method further includes:
sending, by the first core network element, a fourth call setup request message to the MRF; and
receiving, by the first core network element, a fifth response message from the MRF; where
the fifth response message is used to respond to the fourth call setup request message, the fourth call setup request message is determined based on the first call setup request message, and at least one of the following is satisfied between the fourth call setup request message and the first call setup request message:
   a voice coding scheme carried in the fourth call setup request message is different from a voice coding scheme carried in the first call setup request message;
   the number of parameters included in a first message header carried in the fourth call setup request message is different from the number of parameters included in a first message header carried in the first call setup request message; and
   in a case that the first call setup request message carries a second message header, the fourth call setup request message does not carry the second message header, and in a case that the first call setup request message does not carry a second message header, the fourth call setup request message carries the second message header.

In this embodiment, the above fourth call setup request message can refer to the relevant description of the above second call setup request message, which will not be repeated here.

For example, the first core network element may send a fourth call setup request message to the MRF, for example, an invite message carrying an SDP offer. When the MRF has received the fourth call setup request message, it may send a response message in reply to the fourth call setup request message to the first core network device, for example, a 200 OK message carrying an SDP answer.

It should be noted that in this embodiment, after the first core network element sends the fourth call setup request message to the MRF and receives the response message of the fourth call setup request message from the MRF, it may further send a fifth call setup request message to the second terminal and receive a response message returned by the second terminal in reply to the fifth call setup request message. For example, the first core network element can send the fifth call setup request message to the second terminal via the S-CSCF, and receive the response message in reply to the fifth call setup request message from the second terminal via S-CSCF, so as to establish an RTP connection for voice transmission between the second terminal and the MRF, and the RTP connection supports transmission of a voice code stream encoded using the voice coding scheme supported by the second terminal. In this way, the MRF enables the conversion between voice coding schemes of the first terminal and the second terminal, thereby ensuring the call between the first terminal and the second terminal.

Optionally, the method further includes:
in a case that the first core network element has received the fourth response message from the MRF, sending, by the first core network element, a sixth response message to an SBC or a P-CSCF, where the sixth response message is determined based on the fourth response message.

In this embodiment, when the first core network element has received the fourth response message from the MRF, it directly sends the sixth response message to the SBC or P-CSCF, so that in response to receiving the sixth response message, the SBC or P-CSCF can directly establish a bearer for voice service transmission for the first terminal, for example, by initiating the procedure for establishing a dedicated QoS flow for voice service transmission, and send a response message to the first terminal when the bearer for voice service transmission is established. In this way, compared with establishing a bearer for voice service transmission for the first terminal in response to receiving the response message returned by the second terminal, the voice call setup delay can be shortened.

Optionally, the first core network element is an application server AS.

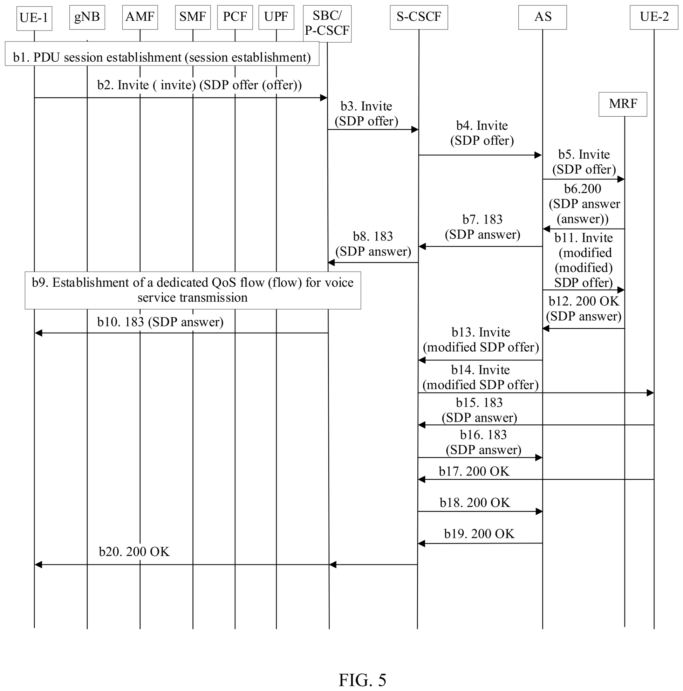

The following provides an illustrative description with reference to FIG. 5, where the first core-network network element is the AS.

As shown in FIG. 5, the call setup method according to this embodiment includes the following steps.

Step b1. UE-1 establishes a PDU session for transmitting IMS services.

Step b2. UE-1 sends an invite message carrying an SDP offer to an SBC/P-CSCF.

Step b3. The SBC/P-CSCF sends the invite message to an S-CSCF.

Step b4. The S-CSCF sends the invite message to an AS serving UE-1.

Step b5. When the AS determines that UE-1 or UE-2 accesses a network via a satellite, the AS sends an invite message to an MRF, carrying the SDP offer of the invite message sent by UE-1.

Step b6. The MRF responds with a response message, for example, 200 OK or 183 message, carrying an SDP answer.

Step b7. The AS sends a 183 message to the S-CSCF, carrying an SDP answer.

Step b8. The S-CSCF sends the 183 message to the SBC/P-CSCF.

Step b9. The SBC/P-CSCF directly initiates a procedure for establishing a dedicated QoS flow for voice service transmission.

Step b10. After the dedicated QoS flow is established, the SBC/P-CSCF sends the 183 message to UE-1, carrying an SDP answer.

Step b11. The AS sends an invite message carrying a modified voice coding scheme SDP offer (that is, Modified SDP offer) to the MRF.

For example, the AS modifies the mean-awb-bitrate of SDP offer from 1200 to 4750, or modifies b=AS from 18.4 to 22.

Step b12. The MRF responds with a response message, for example, 200 OK or 183 message, carrying an SDP answer.

Step b13. The AS sends the invite message carrying the modified voice coding scheme SDP offer to S-CSCF.

Step b14. The S-CSCF sends the invite message carrying the modified voice coding scheme SDP offer to UE-2.

Step b15. UE-2 sends the 183 message carrying an SDP answer to the S-CSCF.

Step b16. The S-CSCF sends the 183 message carrying an SDP answer to the AS.

Step b17. When UE-2 answers the call, it sends a 200 OK confirmation message to the S-CSCF.

Steps b18-20. The 200 OK message is sent to UE-1 via the AS, S-CSCF, and SBC/P-CSCF, at which point UE-1 and UE-2 commence the call.

It should be noted that the execution order of the above step b7 and step b11 is not fixed, and they can be executed simultaneously. In addition, the execution order of the above step b8 and step b12 is not fixed, and they can also be executed simultaneously.

It should also be noted that FIG. 5 is illustrated by taking UE-1 as the calling party as an example. For UE-1 as the called party, when the AS receives a request sent to UE-1, and determines that UE-1 accesses the network via a satellite, it can directly send the 183 message to the call initiator, carrying an SDP answer.

It can be seen that in this embodiment, when AS determines that UE-1 or UE-2 accesses the network via a satellite, it establishes an RTP connection between UE-1 and MRF based on the voice coding scheme supported by UE-1, and establishes an RTP connection between UE-2 and MRF based on the voice coding scheme supported by UE-2, so that transcoding between UE-1 and UE-2 can be realized through MRF, ensuring voice communication between UE-1 and UE-2. In addition, AS directly sends a 183 message carrying an SDP answer to UE-1, so that SBC/P-CSCF can initiate the procedure for establishing a dedicated QoS flow for transmitting voice service according to the 183 message without waiting for the 183 message returned by UE-2, which can shorten the voice call setup delay.

It should be noted that the call setup method provided by the embodiments of the present application can be executed by a call setup apparatus, or a control module in the call setup apparatus for executing the call setup method. In the embodiments of the present application, the call setup apparatus executing the call setup method is taken as an example to illustrate the call setup apparatus provided by the embodiments of the present application.

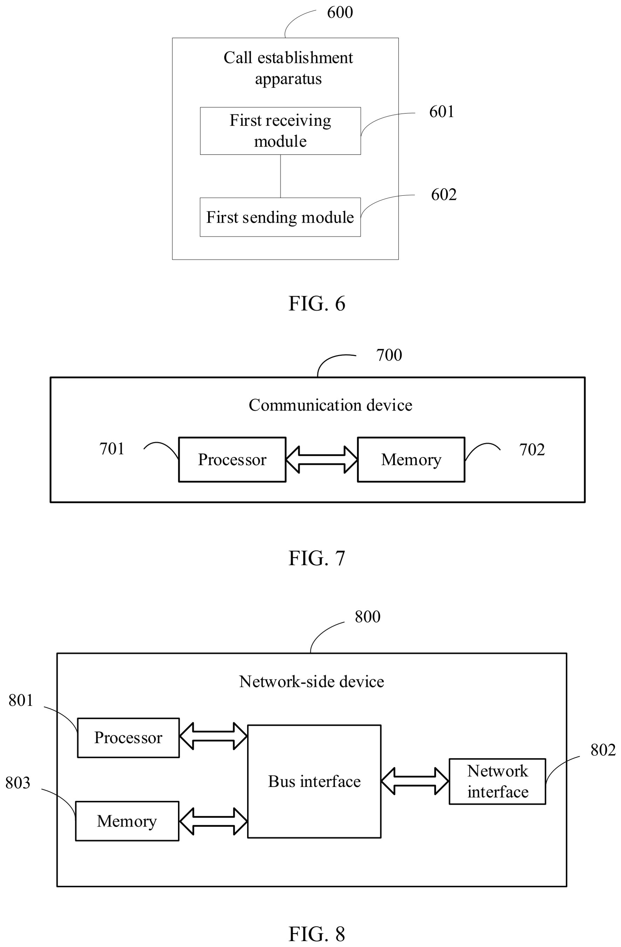

Referring to FIG. 6, FIG. 6 is a structural diagram of a call setup apparatus according to an embodiment of the present application. The call setup apparatus can be applied to a first core network element. As shown in FIG. 6, the call setup apparatus 600 includes:
a first receiving module 601, configured to receive a first call setup request message sent by a first terminal; where the first call setup request message is used to request establishment of a voice call between the first terminal and a second terminal; and
a first sending module 602, configured to send a second call setup request message to the second terminal; where the second call setup request message is determined based on the first call setup request message, and at least one of the following is satisfied between the second call setup request message and the first call setup request message:
   a voice coding scheme carried in the second call setup request message is different from a voice coding scheme carried in the first call setup request message;
   the number of parameters included in a first message header carried in the second call setup request message is different from the number of parameters included in a first message header carried in the first call setup request message; and
   in a case that the first call setup request message carries a second message header, the second call setup request message does not carry the second message header, and in a case that the first call setup request message does not carry a second message header, the second call setup request message carries the second message header.

Optionally, the first message header includes at least one of the following:
contact header, call-ID header, allow header, and from header.

Optionally, the second message header includes at least one of the following: supported header, minimum session expiration header, and via header.

Optionally, the voice coding scheme carried in the second call setup request message is a voice coding scheme supported by the second terminal.

Optionally, the apparatus further includes:
a second sending module, configured to send a second response message to the first terminal, in response to receiving a first response message sent by the second terminal; where the first response message is used to respond to the second call setup request message, and the second response message is used to respond to the first call setup request message.

Optionally, in response to receiving the first response message sent by the second terminal, the first core network element does not establish a bearer for voice service transmission for the first terminal.

Optionally, the apparatus further includes:
an execution module, configured to perform at least one of the following in response to receiving the first call setup request message sent by the first terminal:
establishing a bearer for voice service transmission for the first terminal; and
sending a third response message to the first terminal, where the third response message is used to respond to the first call setup request message.

Optionally, the bearer for voice service transmission includes at least one of the following: quality of service QoS flow and evolved packet system EPS bearer.

Optionally, the first sending module is specifically configured to:
send a second call setup request message to the second terminal in response to determining that a target terminal accesses a network via a communication satellite; where the target terminal includes the first terminal or the second terminal.

Optionally, the target terminal includes the first terminal; and
the apparatus further includes:
a first determining module, configured to determine, based on first information, that the first terminal accesses a network via a communication satellite; where
the first information includes at least one of the following:
   an access type carried in the first call setup request message;
   a voice coding scheme carried in the first call setup request message;
   message content carried in the first call setup request message;
   access information of the first terminal pre-stored by the first core network element; and
   an access type of the first terminal received by the first core network element from a second core network element.

Optionally, the target terminal includes the second terminal; and
the apparatus further includes:
a second determining module, configured to determine, based on second information, that the second terminal accesses the network via a communication satellite; where
the second information includes at least one of the following:
   pre-stored access information of the second terminal; and
   an access type of the second terminal received from the second core network element.

Optionally, the first core network element is a session border controller SBC or a proxy call session control function P-CSCF.

Optionally, the apparatus further includes:
a third sending module, configured to send a third call setup request message to a media resource function MRF; where the third call setup request message is determined based on the first call setup request message; and
a second receiving module, configured to receive a fourth response message from the MRF, where the fourth response message is used to respond to the third call setup request message.

Optionally, the apparatus further includes:
a fourth sending module, configured to send a fourth call setup request message to the MRF; and
a third receiving module, configured to receive a fifth response message from the MRF; where
the fifth response message is used to respond to the fourth call setup request message, the fourth call setup request message is determined based on the first call setup request message, and at least one of the following is satisfied between the fourth call setup request message and the first call setup request message:
   a voice coding scheme carried in the fourth call setup request message is different from a voice coding scheme carried in the first call setup request message;
   the number of parameters included in a first message header carried in the fourth call setup request message is different from the number of parameters included in a first message header carried in the first call setup request message; and
   in a case that the first call setup request message carries a second message header, the fourth call setup request message does not carry the second message header, and in a case that the first call setup request message does not carry a second message header, the fourth call setup request message carries the second message header.

Optionally, the apparatus further includes:
a fifth sending module, configured to send a sixth response message to an SBC or P-CSCF in response to receiving the fourth response message from the MRF, where the sixth response message is determined based on the fourth response message.

Optionally, the first core network element is an application server AS.

The call setup apparatus in the embodiments of the present application may be an electronic device, for example, an electronic device with an operating system, or may be a component in an electronic device, for example, an integrated circuit or a chip. The electronic device may be a network-side device or may be a device other than a network-side device. For example, the network-side device may include but is not limited to the types of the network-side device 12 listed above, and other devices may be servers or network attached storage (Network Attached Storage, NAS), which are not specifically limited in the embodiments of the present application.

The call setup apparatus provided in the embodiments of the present application can implement the various processes implemented by the method embodiment of FIG. 3, with the same technical effect achieved. To avoid repetition, details are not repeated herein.

Optionally, as shown in FIG. 7, an embodiment of the present application further provides a communication device 700 including a processor 701 and a memory 702, where the memory 702 stores a program or instructions executable on the processor 701, and the program or instructions, when executed by the processor 701, implement the steps of the above-mentioned call setup method embodiment, with the same technical effect achieved. To avoid repetition, details are not repeated herein.

The embodiment of the present application further provides a network-side device including a processor and a communication interface, where the communication interface is configured to: receive a first call setup request message sent by a first terminal; where the first call setup request message is used to request establishment of a voice call between the first terminal and a second terminal; and send a second call setup request message to the second terminal, where the second call setup request message is determined based on the first call setup request message, and at least one of the following is satisfied between the second call setup request message and the first call setup request message: a voice coding scheme carried in the second call setup request message is different from a voice coding scheme carried in the first call setup request message; the number of parameters included in a first message header carried in the second call setup request message is different from the number of parameters included in a first message header carried in the first call setup request message; and in a case that the first call setup request message carries a second message header, the second call setup request message does not carry the second message header, and in a case that the first call setup request message does not carry a second message header, the second call setup request message carries the second message header. This network-side device embodiment corresponds to the above method embodiment, and the various implementation processes and implementation modes of the above-mentioned method embodiment can be applied to this network-side device embodiment, with the same technical effect achieved.

Specifically, the embodiment of the present application further provides a network-side device. As shown in FIG. 8, the network-side device 800 includes: a processor 801, a network interface 802, and a memory 803. The network interface 802 is, for example, a common public radio interface (common public radio interface, CPRI).

Specifically, the network-side device 800 of the embodiments of the present application further includes instructions or a program stored in the memory 803 and executable on the processor 801, and the processor 801 calls the instructions or programs in the memory 803 to execute the method executed by the various modules shown in FIG. 6, with the same technical effect achieved. To avoid repetition, details are not repeated herein.

The embodiment of the present application further provides a readable storage medium, where the readable storage medium stores a program or instructions, and the program or instructions, when executed by a processor, implement the various processes of the above-mentioned call setup method embodiment, with the same technical effect achieved. To avoid repetition, details are not repeated herein.

The processor is the processor in the terminal described in the above embodiment. The readable storage medium includes a computer-readable storage medium, such as a computer read-only memory (Read-Only Memory, ROM), a random access memory (Random Access Memory, RAM), a magnetic disk, or an optical disk. In some examples, the readable storage medium may be a non-transitory readable storage medium.

An embodiment of the present application further provides a chip, where the chip includes a processor and a communication interface, the communication interface is coupled to the processor, and the processor is configured to run a program or instructions to implement the various processes of the above-mentioned call setup method embodiment, with the same technical effect achieved. To avoid repetition, details are not repeated herein.

It should be understood that the chip mentioned in the embodiments of the present application may also be called a system on chip, a system chip, a chip system or a system-on-chip chip.

An embodiment of the present application further provides a computer program/program product, where the computer program/program product is stored in a storage medium, and the computer program/program product is executed by at least one processor to implement the various processes of the above-mentioned call setup method embodiment, with the same technical effect achieved. To avoid repetition, details are not repeated herein.

An embodiment of the present application further provides a call setup system including: a first terminal, a second terminal, and a network-side device, where the network-side device is configured to execute the various processes of FIG. 3 and the above method embodiments, with the same technical effect achieved. To avoid repetition, details are not repeated herein.

It should be noted that in this article, the terms "include", "contain" or any other variation thereof are intended to cover non-exclusive inclusion, so that a process, method, article or device that includes a series of elements includes not only those elements, but also other elements not explicitly listed, or also includes elements inherent to such process, method, article or device. Without more restrictions, an element defined by the statement "including one..." does not exclude the existence of another identical element in the process, method, article or device that includes the element. In addition, it should be pointed out that the scope of the methods and devices in the embodiments of the present application is not limited to performing functions in the order shown or discussed, but may also include performing functions in a substantially simultaneous manner or in a reverse order according to the functions involved, for example, the described methods may be performed in an order different from that described, and various steps may also be added, omitted, or combined. In addition, features described with reference to certain examples may be combined in other examples.

Through the description of the above embodiments, those skilled in the art can clearly understand that the above embodiment methods can be implemented by means of a computer software product plus a necessary general hardware platform, and certainly can also be implemented by hardware. This computer software product is stored in a storage medium (such as ROM, RAM, magnetic disk, or optical disk) and includes a number of instructions to enable a terminal or a network-side device to execute the methods described in the various embodiments of the present application.

The above are merely some embodiments of the present application. Those of ordinary skill in the art can make many forms of embodiments under the enlightenment of the present application without departing from the purpose of the present application and the scope of protection of the claims, and these all fall within the protection of the present application.

## Claims

1. A call setup method, comprising:
receiving, by a first core network element, a first call setup request message sent by a first terminal; wherein the first call setup request message is used to request establishment of a voice call between the first terminal and a second terminal; and
sending, by the first core network element, a second call setup request message to the second terminal; wherein the second call setup request message is determined based on the first call setup request message, and at least one of the following is satisfied between the second call setup request message and the first call setup request message:
a voice coding scheme carried in the second call setup request message is different from a voice coding scheme carried in the first call setup request message;
the number of parameters comprised in a first message header carried in the second call setup request message is different from the number of parameters comprised in a first message header carried in the first call setup request message; and
in a case that the first call setup request message carries a second message header, the second call setup request message does not carry the second message header, and in a case that the first call setup request message does not carry a second message header, the second call setup request message carries the second message header.

2. The method according to claim 1, wherein the first message header comprises at least one of the following:
contact header, call-ID header, allow header, and from header.

3. The method according to claim 1 or 2, wherein the second message header comprises at least one of the following: supported header, minimum session expiration header, and via header.

4. The method according to any one of claims 1 to 3, wherein the voice coding scheme carried in the second call setup request message is a voice coding scheme supported by the second terminal.

5. The method according to any one of claims 1 to 4, wherein the method further comprises:
sending, by the first core network element, a second response message to the first terminal, in response to receiving a first response message sent by the second terminal; wherein the first response message is used to respond to the second call setup request message, and the second response message is used to respond to the first call setup request message.

6. The method according to any one of claims 1 to 5, wherein in response to receiving the first response message sent by the second terminal, the first core network element does not establish a bearer for voice service transmission for the first terminal.

7. The method according to any one of claims 1 to 4, wherein the method further comprises:
performing, by the first core network element in response to receiving the first call setup request message sent by the first terminal, at least one of the following:
establishing a bearer for voice service transmission for the first terminal; and
sending a third response message to the first terminal, wherein the third response message is used to respond to the first call setup request message.

8. The method according to claim 7, wherein the bearer for voice service transmission comprises at least one of the following: quality of service QoS flow, and evolved packet system EPS bearer.

9. The method according to any one of claims 1 to 8, wherein the sending, by the first core network element, a second call setup request message to the second terminal comprises:
sending, by the first core network element in response to determining that a target terminal accesses a network via a communication satellite, the second call setup request message to the second terminal; wherein the target terminal comprises the first terminal or the second terminal.

10. The method according to claim 9, wherein the target terminal comprises the first terminal; and
the method further comprises:
determining, by the first core network element based on a first information, that the first terminal accesses the network via a communication satellite; wherein
the first information comprises at least one of the following:
an access type carried in the first call setup request message;
a voice coding scheme carried in the first call setup request message;
message content carried in the first call setup request message;
an access information of the first terminal pre-stored by the first core network element; and
an access type of the first terminal received by the first core network element from a second core network element.

11. The method according to claim 9, wherein the target terminal comprises the second terminal; and
the method further comprises:
determining, by the first core network element based on a second information, that the second terminal accesses the network via a communication satellite; wherein
the second information comprises at least one of the following:
an access information of the second terminal pre-stored by the first core network element; and
an access type of the second terminal received by the first core network element from a second core network element.

12. The method according to any one of claims 1 to 11, wherein the first core network element is a session border controller SBC or a proxy call session control function P-CSCF.

13. The method according to any one of claims 1 to 11, wherein the method further comprises:
sending, by the first core network element, a third call setup request message to a media resource function MRF; wherein the third call setup request message is determined based on the first call setup request message; and
receiving, by the first core network element, a fourth response message from the MRF, wherein the fourth response message is used to respond to the third call setup request message.

14. The method according to claim 13, wherein the method further comprises:
sending, by the first core network element, a fourth call setup request message to the MRF; and
receiving, by the first core network element, a fifth response message from the MRF; wherein
the fifth response message is used to respond to the fourth call setup request message, the fourth call setup request message is determined based on the first call setup request message, and at least one of the following is satisfied between the fourth call setup request message and the first call setup request message:
a voice coding scheme carried in the fourth call setup request message is different from a voice coding scheme carried in the first call setup request message;
the number of parameters comprised in a first message header carried in the fourth call setup request message is different from the number of parameters comprised in a first message header carried in the first call setup request message; and
in a case that the first call setup request message carries a second message header, the fourth call setup request message does not carry the second message header, and in a case that the first call setup request message does not carry a second message header, the fourth call setup request message carries the second message header.

15. The method according to claim 13 or 14, wherein the method further comprises:
in a case that the first core network element has received the fourth response message from the MRF, sending, by the first core network element, a sixth response message to an SBC or a P-CSCF, wherein the sixth response message is determined based on the fourth response message.

16. The method according to any one of claims 13 to 15, wherein the first core network element is an application server AS.

17. A call setup apparatus applied to a first core network element, comprising:
a first receiving module, configured to receive a first call setup request message sent by a first terminal; wherein the first call setup request message is used to request establishment of a voice call between the first terminal and a second terminal; and
a first sending module, configured to send a second call setup request message to the second terminal; wherein the second call setup request message is determined based on the first call setup request message, and at least one of the following is satisfied between the second call setup request message and the first call setup request message:
a voice coding scheme carried in the second call setup request message is different from a voice coding scheme carried in the first call setup request message;
the number of parameters comprised in a first message header carried in the second call setup request message is different from the number of parameters comprised in a first message header carried in the first call setup request message;
in a case that the first call setup request message carries a second message header, the second call setup request message does not carry the second message header, and in a case that the first call setup request message does not carry a second message header, the second call setup request message carries the second message header.

18. The apparatus according to claim 17, wherein the first message header comprises at least one of the following:
contact header, call-ID header, allow header, and from header.

19. The apparatus according to claim 17 or 18, wherein the second message header comprises at least one of the following: supported header, minimum session expiration header, and via header.

20. The apparatus according to any one of claims 17 to 19, wherein the voice coding scheme carried in the second call setup request message is a voice coding scheme supported by the second terminal.

21. The apparatus according to any one of claims 17 to 20, wherein the apparatus further comprises:
a second sending module, configured to send a second response message to the first terminal, in response to receiving a first response message sent by the second terminal; wherein the first response message is used to respond to the second call setup request message, and the second response message is used to respond to the first call setup request message.

22. The apparatus according to any one of claims 17 to 21, wherein in response to receiving the first response message sent by the second terminal, the first core network element does not establish a bearer for voice service transmission for the first terminal.

23. The apparatus according to any one of claims 17 to 20, wherein the apparatus further comprises:
an execution module, configured to perform at least one of the following in response to receiving the first call setup request message sent by the first terminal:
establishing a bearer for voice service transmission for the first terminal; and
sending a third response message to the first terminal, wherein the third response message is used to respond to the first call setup request message.

24. The apparatus according to any one of claims 17 to 23, wherein the first sending module is specifically configured to:
send a second call setup request message to the second terminal in response to determining that a target terminal accesses a network via a communication satellite; wherein the target terminal comprises the first terminal or the second terminal.

25. A network-side device, comprising a processor and a memory, wherein the memory stores a program or instructions executable on the processor, and the program or instructions, when executed by the processor, implement the steps of the call setup method according to any one of claims 1 to 16.

26. A readable storage medium, wherein the readable storage medium stores a program or instructions, and the program or instructions, when executed by a processor, implement the steps of the call setup method according to any one of claims 1 to 16.
